# EUROPEAN PATENT APPLICATION

(11) **EP 1 043 248 A2**
(43) Date of publication of application: **11.10.2000**
(21) Application number: 00104985.7
(22) Date of filing: 09.03.2000
(51) Int. Cl.: B65G 17/38

(54) **A toothed chain conveyor capable to perform a curvilinear movement in a travel plane, and chain elements**

(30) Priority: 18.03.1999 IT MI990544
(71) Applicant: Fond-Metalli conveyors S.r.l., 23804 Monte Marenzo (Lecco) (IT)
(72) Inventor: Bonacina, Simpliciano, 22050 Valgreghentino (Como) (IT)
(74) Representative: Zavattoni, Maria Chiara

(57) **Abstract**

A toothed-chain conveyor, particularly of a silent-chain type, comprises chain plates (10) in which at least one of the slots (15) has a longitudinally elongated shape. This enables the conveyor, when appropriately guided, to arrange itself according to plane curves in the planar of the conveyor.

## Description

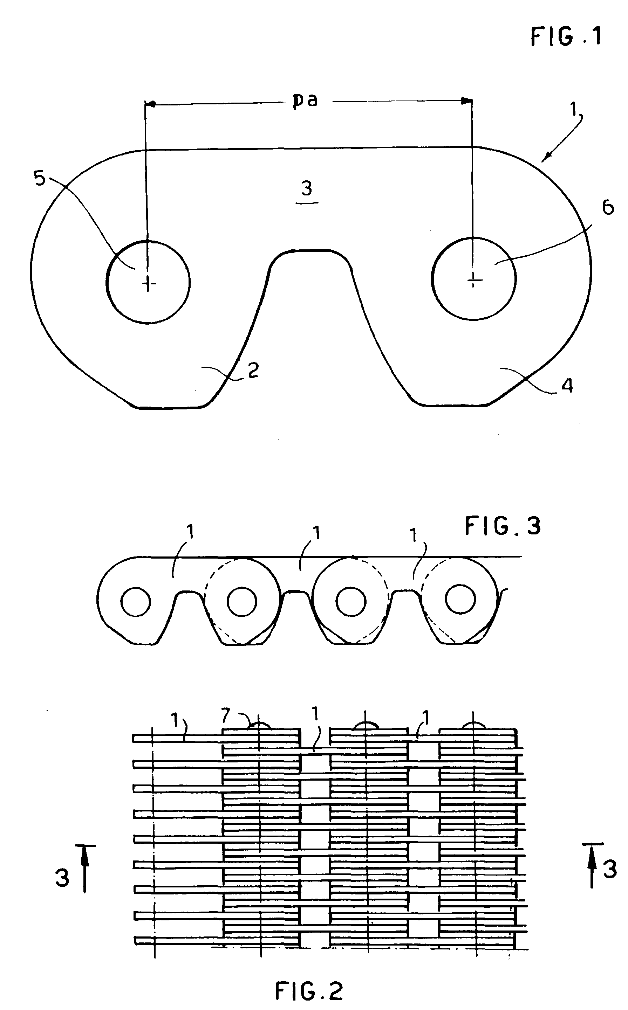

The present invention refers to the field of toothed chains, in particular of toothed-chain conveyors, which comprise, on each chain pin, a number of co-operating links or plates set alongside each other so as to form a sort of moving belt. The said conveyors are generally actuated by meshing sprocket or gear wheels meshing therewith, said sprocket or gear wheels having a number of toothings set alongside each other. A known toothed-chain conveyor of this type is shown in the annexed Figs. 1 and 2.

The links or plates of known toothed-chain conveyors are generally made like links or plates of gearing chains and, more preferably, like links of so-called "silent chains". A known type of plate is shown in the attached Figure 1. The plate 1 shown in Figure 1 has a two-lobed shape, the two lobes 2, 4 being joined by a bridge-like body 3, and each lobe having a particular profile designed to mesh with the gear wheels for transmitting motion with minimum noise emission. Each lobe has a slot, 5 and 6, respectively, for engagement by a pin or link stud 7. The shape of the slots and the cross sectional shape of the pin in the figures are shown as circular and of corresponding dimensions except for any clearance. Also widely used are link studs having vertically elongated cross sectional shape, which couple to slots with a number of centres, in order to enable rotation of the plates in an area corresponding to the gear wheels.

The pitch between the link studs in known conveyors is generally approximately ½ in. (12.7 mm). The space occupied by a pin or link stud within the respective slot is such as not to enable any substantial sliding between the plate and the pin in the longitudinal direction, i.e., in the direction of travel of the conveyor. Consequently, known toothed-chain conveyors are suitable for conveying along a rectilinear path, but cannot be adapted to curved paths having a curvature in the plane of conveyance travel.

On the other hand, toothed-chain conveyors are widely preferred in certain sectors, such as in glass-making, where they have to work at high temperatures and where the use of other types of conveyors is penalized by installation costs or by high running costs due to rapid wear.

An aim of the present invention is to overcome the drawback referred to above and to provide a tooted-chain conveyor which may cover a path with curves of wide radius in the plane of the path, i.e., in the plane of useful travel of the conveyor.

The above purpose has been achieved by a tooted-chain conveyor as specified in Claim 1. Further characteristics are specified in the dependent claims.

A plate element for a chain or chain conveyor, as claimed in Claim 6 is also part of the present invention.

The new chain conveyor is able to cover paths with curves of wide radius in the plane of conveyance; it can be manufactured as a normal chain or as a silent chain.

Exemplary unrestrictive embodiments of the chain conveyor and elements thereof will be described in the following, with reference to the attached drawings in which:
Figs. 1, 2 and 3 (prior art) are, respectively, an enlarged elevational view of a well-known plate or link, a top plan view of a length of a per-se known chain conveyor, and a cross-sectional view of the same conveyor taken on a plane indicated by 3-3 in Fig. 2;
Fig. 4 is an enlarged front elevational view of an embodiment of a plate for a toothed-chain conveyor according to the invention;
Fig. 5 is an enlarged front elevational view of a second type of plate for a toothed-chain conveyor according to the invention;
Fig. 6 shows a third type of plate according to the invention;
Fig. 7 shows a "solid" plate, or guide plate, for the conveyor according to the invention;
Fig. 8 and Fig. 9 show, respectively, a link stud having an oval cross sectional shape and a quadrangular stub, and a washer suitable for it;
Fig. 10 is a broken-away elevational view of a containment plate for a conveyor according to the invention;
Figs. 11 and 12 are, respectively, a plan view and a cross-sectional elevational view (according to 12-12) of a length of a tooted-chain conveyor according to the invention, in a laid out condition on a rectilinear path; and
Fig. 13 is a plan view similar to that of Fig. 11 but showing the chain conveyor in a curved condition in the plane of movement.

Figs. 1, 2 and 3 have been explained above wit reference to the state of the art and will not be described any further herein.

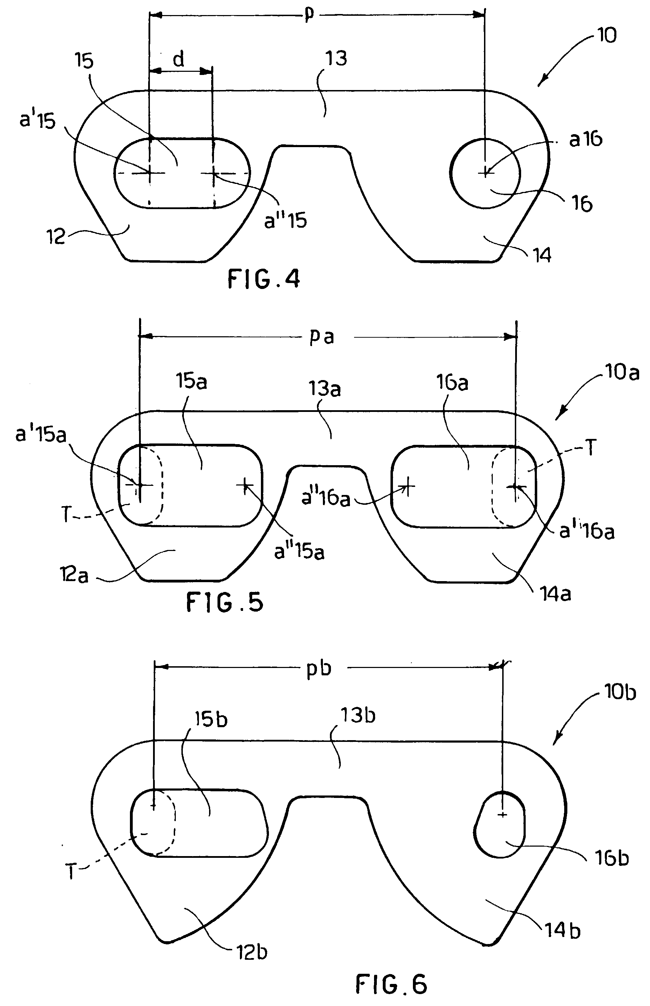

A chain plate according to the invention, in Fig. 4, is designated by the reference number 10, and has two lobes 12, 14 which are connected by a central bridge-like body 13. Each one of the lobes has a slot for engagement of a pin or link stud, the slots being designated, respectively, by 15 and 16. The slot 16 has a traditional, circular shape, with axis a₁₆. The slot 15 has a shape elongated in the longitudinal direction, where by longitudinal is meant the direction of advance, i.e. the travel direction, of the conveyor. The elongated shape of the slot 15 comprises two half-circumferences, with axes a'₁₅ and a''₁₅, which have their diameters equal to the diameter d₁₆ of the slot 16 and are at a distance d from one another, and an intermediate slot portion having parallel sides.

Consequently, when the plate 10 is engaged on link studs having a diameter of approximately d₁₆ with the slots 15 and 16, the slot 16 enables only a rotation on the link stud, whilst the slot 15 enables also reciprocal sliding.

The distance or pitch p between the distal axis a'₁₅ of the slot 15 and the axis a₁₆ is generally, but not exclusively, one inch (25.4 mm); i.e., the plate is generally longer than traditional plates. The profile of the lobes is generally made according to one of the per-se known shapes of silent-type chains or the like, and is not part of the present application.

The plate according to the invention, shown in Fig. 5, is designated as a whole by 10a, and comprises two lobes 12a, 14a and a central body 13a. Both of the lobes are provided with identical longitudinally elongated openings, referenced 15a, 16a, having a basically rectangular shape with rounded corners. The slots are suitable for being engaged by traditional link studs T of the type having a vertically elongated cross section, as illustrated by the dashed line in the figure. Each slot defines two spaced axes a'₁₅ₐ, a''₁₅ₐ; a'₁₆ₐ, a''₁₆ₐ corresponding to a distal and a proximal positions of the link stud in the slot. Engagement between the link studs and the slots enables a rotation of the plate about the link stud to enable engagement with driving gear wheels and enables reciprocal longitudinal sliding.

Fig. 6 shows a further plate 10b according to the invention, which is equipped with a longitudinally elongated slot 15b, on one lobe 12b, and with a traditional multicentric slot 16b, on the other lobe 14b. The multicentric slot has a per-se known shape known, which is designed to enable rotation of the plate on the link stud T having an elongated cross section. The proximal side and distal side of the elongated slot 15b have the shape of the two sides of a multicentric slot. A pitch p_{b} between the distal centres of the slots is approximately 1 in., corresponding to 25.4 mm.

Also in these plates, the profiles of the lobes are preferably traditional profiles for chains of the so-called "silent" type. However, it is understood that the invention may equally well apply to chains not belonging to this category.

The plates described are mere examples of a wide range of possible plates, according to the invention, having one or two elongated slots, of various shapes.

The invention also envisages various accessory elements of the conveyor.

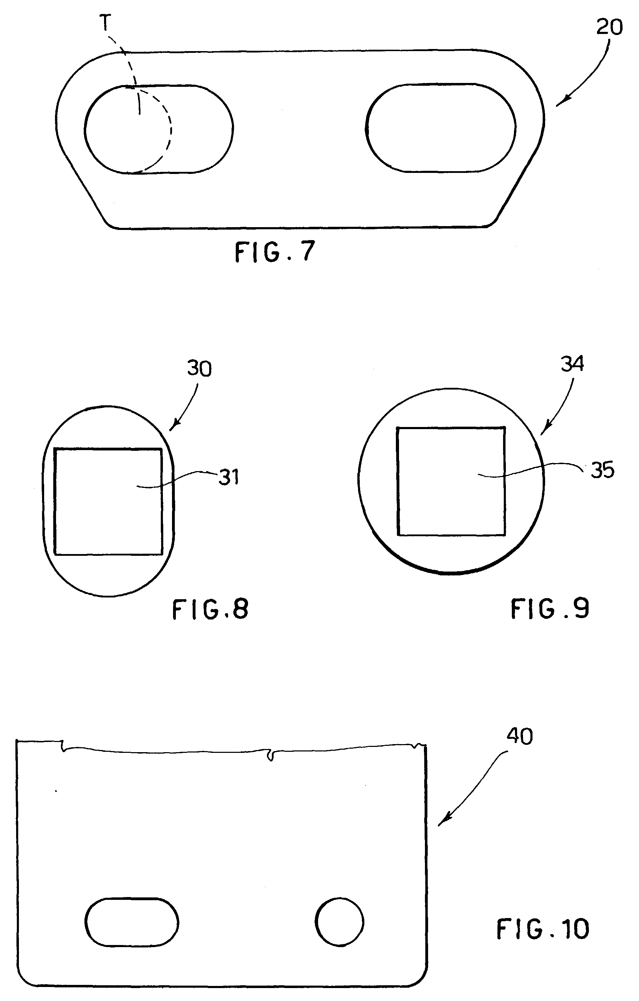

Fig. 7 illustrates a so-called "solid" plate, 20, with a straight bottom edge, as is sometimes used in a transversally intermediate or lateral position on the toothed-chain conveyor for guide engagement in appropriate grooves in the driving gear wheels. The plate 20 has one or two elongated slots like the other plates of the conveyor. In the particular embodiment shown in the drawing, the slots have semicircular ends and are designed for engaging with a round-sectioned link stud T.

Fig. 8 is a cross sectional view of an embodiment of link stud 30 that may be used with the plates of Figs. 5 and 6. The link stud has a body with an oblong cross section, and is defined by two parallel sides and by two semicircular sides; it moreover has a quadrangular stub 31. An end washer 34 having a quadrangular opening 35 engages with the link stud.

Fig. 10 shows a containment plate 40 for a conveyor according to the invention. The containment plates are designed to be mounted on the link studs laterally, or also in intermediate positions, so as to protrude onto a plane of conveyance defined by the plates, to act as containment means on the conveyed material. The containment plates have one or two elongated slots which correspond in terms of shape and size to the slots of the conveyor plates. In particular, the plate 40 has slots like the plate 10 in Fig. 4.

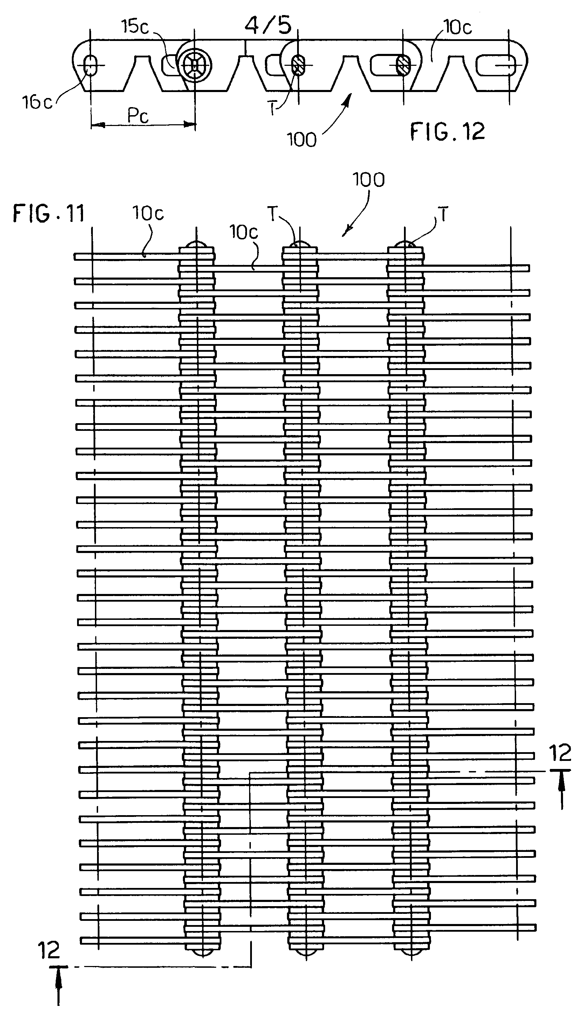

Figs. 11, 12 and 13 show a chain conveyor 100 according to the present invention, made using plates 10c each provided with a slot 16c having a shape corresponding to the cross sectional shape of the link stud T, and with a longitudinally elongated slot 15c. The conveyor is shown in a condition in which it is moving along a rectilinear path, i.e., with the link studs T parallel to one another and with a pitch p_{c} between them, i.e., with the plates arranged according to the maximum longitudinal extension. In other words, as may be seen in Fig. 12, the link studs occupy the distal position of the longitudinally elongated slots of each plate.

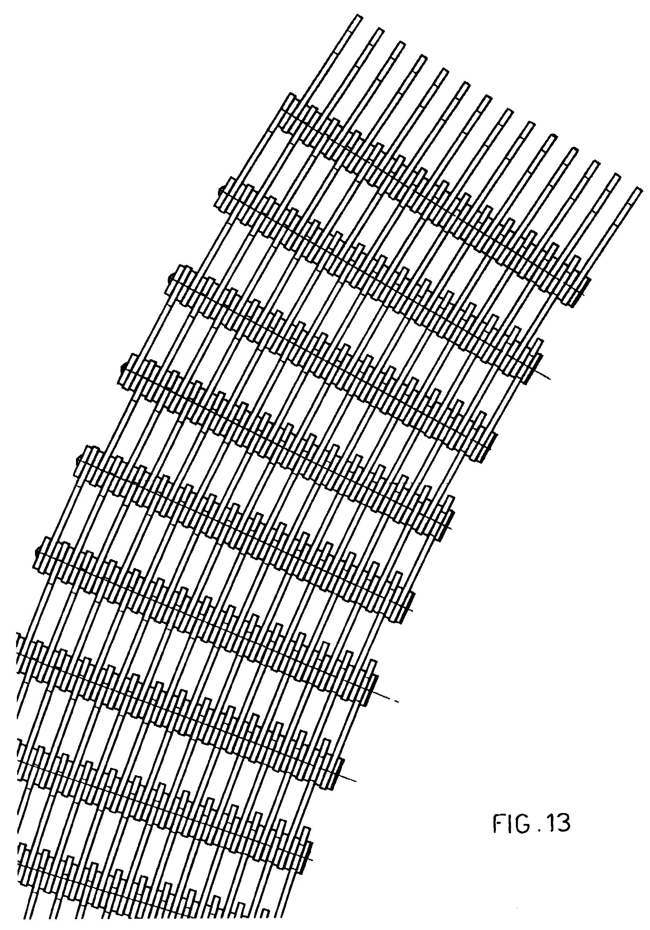

To describe a curve in the plane of the drawing, as illustrated in Fig. 13, a reciprocal sliding of the link studs and of some of the plates in the longitudinal direction occurs, so that the link studs are arranged slightly converging. The plates arranged according to the maximum radius of the curve remain in a condition of maximum widening, whilst the plates arranged according to increasingly smaller radiuses of the curve are arranged so that they overlap more and more, up to a radius where the link studs occupy the proximal ends of the elongated openings. To achieve this, assembly of the plates on each link stud allows a certain degree of clearance.

## Claims

1. A toothed-chain conveyor comprising a plurality of chain plates which are arranged in longitudinal succession along a movement or travel direction of the conveyor and alongside each other, adjacent plates being connected together in a staggered arrangement by means of pins or link studs on which the plates are freely rotatable, at least for an angle, each plate being engaged on a front link stud and a rear link stud with a respective front slot and a respective rear slot, characterized in that it comprises plates in which at least one of said plate slots (15; 15a, ...) has a longitudinally elongated shape so as to be able to receive a respective link stud with a possibility of reciprocal longitudinal sliding.

2. A conveyor according to Claim 1, characterized in that the said plates (10a) have both slots (15a, 16a) elongated longitudinally.

3. A conveyor according to Claim 1 or Claim 2, characterized in that maximum center distance of each plate, defined as the centre distance between the positions that the respective pins or link studs occupy in their distal positions with respect to the plate, is approximately 1 inch (25.4 mm).

4. A conveyor according to Claim 1, characterized in that it comprises pins provided with quadrangular engagement stubs and covering caps with quadrangular holes.

5. A conveyor according to Claim 1, comprising accessory elements, such as guide plates and containment plates, provided with slots for engagement on the link studs, the slots having elongated shapes corresponding to the elongated shapes of the slots of the plates that make up the conveyor.

6. A plate for a toothed-chain conveyor, of the type comprising two lobes connected to a central body, and, in each lobe, a through slot for engagement in such a way as to enable rotation on a respective pin or link stud of the conveyor,
characterized in that at least one said slot (15; 15a) has a longitudinally elongated shape, to enable longitudinal mutual sliding of the plate and the link stud.

7. A plate according to Claim 6, characterized in that said elongated slot defines two end positions, namely a proximal position and a distal position, for the pin designed to be received in the slot.

8. A plate according to Claim 6, wherein both slots are longitudinally elongated.

9. A plate according to Claim 7, characterized in that a distance between the distal positions defined by the slots for the pin or link stud is approximately 1 inch (25.4 mm).

10. A plate according to the foregoing claims, characterized in that a lobe profile thereof is of the type for a silent chain.

11. A conveyor according to Claim 1, characterized in that the shape of said at least one elongated slot is one of the following:
- a shape defined by two parallel sides and by a semicircular distal side and a semicircular proximal side;
- a rectangular shape with rounded corners;
- a shape defined by two parallel sides; and the distal side and the proximal side corresponding to respective sides of a multicentric-profile slot.
